# EUROPÄISCHE PATENTSCHRIFT

(11) **EP 1 333 932 B1**
(45) Veröffentlichungstag und Bekanntmachung des Hinweises auf die Patenterteilung: **09.05.2007**
(21) Anmeldenummer: 01976305.1
(22) Anmeldetag: 12.10.2001
(51) Int. Cl.: B03C 1/28, G01N 35/00, G01N 35/10

(54) **VERFAHREN ZUM ABTRENNEN EINES DISPERGIERTEN ODER GELÖSTEN STOFFES UND MAGNETSEPARATOR**
METHOD FOR SEPARATING A DISPERSED OR DISSOLVED SUBSTANCE AND MAGNET SEPARATOR
PROCEDE DE SEPARATION D'UN PRODUIT DISPERSE OU DISSOUS ET SEPARATEUR MAGNETIQUE

(30) Priorität: 18.11.2000 DE 10057396
(43) Veröffentlichungstag der Anmeldung: 13.08.2003
(73) Patentinhaber: Forschungszentrum Karlsruhe GmbH, 76133 Karlsruhe (DE)
(72) Erfinder: FRANZREB, Matthias, 76185 Karlsruhe (DE); WOHLGEMUTH, Jonas, 76661 Rheinsheim (DE)
(74) Vertreter: Rückert, Friedrich
(86) Internationale Anmeldenummer: PCT/EP2001/011807
(87) Internationale Veröffentlichungsnummer: WO 2002/040173

(56) Entgegenhaltungen:
- EP-A- 0 181 798
- DE-A- 19 730 497

## Beschreibung

Die Erfindung betrifft ein Verfahren zum Abtrennen und Überführen eines dispergierten oder gelösten Stoffes gemäß Anspruch 1 und einen Magnetseparator gemäß Anspruch 3.

Bei der medizinischen Diagnostik stellt sich oftmals die Aufgabe, etwa aus Blut- oder Urinproben in geringen Mengen vorliegendes biologisches Material abzutrennen, von Verunreinigungen zu befreien und schließlich qualitativ und/oder quantitativ zu analysieren. Hierzu wird das biologische Material zunächst an funktionalisierte magnetisierbare Mikropartikel gebunden und zusammen mit diesen abgetrennt, wobei die magnetisierbaren Mikropartikel mit Hilfe von elektrischen oder magnetischen Feldern fixiert werden. Als funktionelle Gruppe kann dabei z. B. ein Antikörper dienen, der das interessierende Material mit hoher Selektivität bindet. Anschließend werden die beladenen magnetisierbaren Mikropartikel mit einem neuen Fluid in Kontakt gebracht, das z. B. zu Waschzwecken oder zur Elution des Materials dient. Ähnliche Trennaufgaben stellen sich auch in anderen Bereichen der Biotechnologie. Bei entsprechender Funktionalisierung der Mikropartikel lassen sich Zellen, Proteine, Nukleinsäuresequenzen, Bakterien wie Hefen etc. einfach und schnell aus verschiedenen Vorlagen abtrennen.

Diese Trennaufgaben können durch Verwendung magnetisierbarer Mikropartikel als Sorbentien und durch ihre Abscheidung mittels Magnetseparatoren gelöst werden. Entsprechend funktionalisierte magnetische Mikropartikel sind seit den 80er Jahren auf dem Markt.

Aus der US-6,040192 ist ein Verfahren zur Abtrennung dispergierter oder gelöster Stoffe und ein Magnetseparator bekannt, bei dem ein vertikal angeordneter, hohler Stab eingesetzt wird, der in seinem Innern einen vertikal verschiebbaren Permanentmagneten enthält. Die beiden Pole des Magneten sind entlang der Längsachse des Stabes angeordnet. Der Stab wird in ein Fluid, das magnetisierbare Partikel enthält, eingetaucht, wobei sich der Permanentmagnet am unteren Ende des Stabes befindet, und anschließend zusammen mit den anhaftenden Partikeln aus dem Fluid herauszogen. Die anhaftenden Partikel können von dem Stab abgewaschen werden, indem der Stab in eine Eluierungslösung eingetaucht und der Permanentmagnet nach oben verschoben wird. Zur Durchmischung des Fluids und der Eluierungslösung wird der Stab entlang seiner Längsachse auf- und abbewegt.

Dieses Verfahren und der Magnetseparator werden außerdem im Internet (http://www.the-scientist.com/yr2000/jun/profile1_ 000626.html) beschrieben.

Nachteilig bei diesem Verfahren und diesem Magnetseparator ist, daß das Magnetfeld nicht regelbar ist; es läßt sich am Ort der Probe nur durch mechanisches Verschieben des Permanentmagneten verändern. Daraus können sich Probleme bei der Eluierung oder Resuspendierung einmal abgeschiedener Partikel ergeben, denn auch nach Entfernung des äußeren Magnetfelds können bei ungünstig gewählten Magnetfeldern bleibende Agglomerationen von Partikeln infolge zwischenpartikulärer Wechselwirkungen auftreten. Diese Agglomerationen bilden sich beispielsweise durch van-der Waals Kräfte, durch Vernetzung langkettiger Biomoleküle oder eine nach der Abtrennung verbleibende magnetische Remanenz der Partikel. Die Magnetfeldstärke sollte daher an die jeweilige Trennaufgabe angepaßt werden können. Ein weiteres Problem ist, daß mit Permanentmagneten eine weitere Miniaturisierung erschwert ist. Moderne Analyse- und Screeningverfahren setzen oftmals die parallele Bearbeitung von 96 oder sogar 384 Probevolumina in Mikrotiterplatten voraus. Die Methode zur Durchmischung des Fluids ist zudem wenig effektiv und deshalb zeitaufwendig.

Das Dokument EP 181 798 zeigt die Oberbegriffe der Ansprüche 1 und 3.

Der Erfindung liegt die Aufgabe zugrunde, ein Verfahren und einen Magnetseparator vorzuschlagen, die diese Nachteile nicht aufweisen und bei denen sich insbesondere das Magnetfeld auf einen gewünschten Wert einstellen und die Durchmischung effektiver gestalten läßt.

Die Lösung der Aufgabe ist in den Ansprüchen 1 und 3 beschrieben. In den übrigen Ansprüchen sind bevorzugte Ausgestaltungen des Verfahrens und des Magnetseparators angegeben.

Gemäß dem vorgeschlagenen Verfahren wird die Lösung oder die Dispersion eines Stoffes mit magnetisierbaren Partikeln versetzt, die so ausgewählt sind, daß sich der Stoff an den Partikeln adsorbiert. Für Biomoleküle wie z. B. DNS, RNS, Proteine oder für Zellen wie Blutzellen geeignete Partikel werden kommerziell angeboten. Generell eignen sich Partikel aus Magnetit (Fe₃O₄) oder Chromdioxid (CrO₂), die z. B. mit bifunktionellen Organosilanen beschichtet sind und eine große äußere Oberfläche aufweisen oder funktionalisierte Partikel beispielsweise aus Polyvinylalkoholen oder Aginat, die Magnetit-, Maghemit- oder Chromdioxid-Partikel eingelagert enthalten. Die Größe der Partikel kann 50 nm bis 500 µm, vorzugsweise 0,1µm bis 10 µm, betragen. Die eingesetzte Menge bemißt sich nach der Menge des abzutrennenden Stoffes.

In die Lösung oder Dispersion der magnetisierbaren Partikel, an die der Stoff angelagert ist, wird nun ein Stab aus einem weichmagnetischen Material eingetaucht. Als weichmagnetisches Material eignet sich vor allem Weicheisen oder der Stahl DIN 1.4016. Der direkte Kontakt des weichmagnetischen Materials mit der Lösung oder Dispersion und damit mit den magnetisierbaren Partikeln kann vermieden werden, wenn der Stab mit einer Schutzhülle, etwa einem Kunststoffüberzug, versehen ist. Als Material für die Schutzhülle eignet sich insbesondere Polyethylen, Polypropylen oder Polystyrol. Die Schutzhülle muß hinsichtlich des gewählten Materials und der Materialdicke so gestaltet sein, daß sie das magnetische Feld nicht merklich beeinflußt.

Falls eine Durchmischung der Lösung oder Dispersion erforderlich ist, kann der Stab in Rotation um seine Längsachse versetzt werden. Eine wirksame Durchmischung wird in der Regel durch eine Rotation mit 1 bis 50 Umdrehungen pro Sekunde erzielt.

In dem nachfolgenden Verfahrensschritt wird der Stab entlang seiner Längsachse aufmagnetisiert. Das Aufmagnetisieren erfolgt durch eine elektromagnetische Erregerspule, die den Stab in geeigneter Weise umgibt. Das maximale Magnetfeld der Spule sollte zwischen 2 und 100 mTesla betragen. Vorzugsweise wird eine solche Spule eingesetzt, bei der das Magnetfeld leicht auf einen optimalen Wert eingestellt werden kann. Das Aufmagnetisieren des Stabes bewirkt, daß sich die magnetisierbaren Partikel mit dem sorbierten Stoff auf dem Stab niederschlagen. Die Abscheidung der Partikel kann dadurch unterstützt werden, daß der Stab in langsame Rotation um seine Längsachse, vorzugsweise mit 0,1 bis 5 Umdrehungen pro Sekunde, versetzt wird.

Anschließend wird der Stab mitsamt den darauf abgeschiedenen Partikeln entlang seiner Längsachse aus der Lösung oder Dispersion herausgezogen, wobei das Magnetfeld eingeschaltet bleibt, damit die Partikel weiterhin am Stab haften. Falls er zuvor in Rotation versetzt worden ist, wird die Rotation beendet.

Der Stab wird nunmehr in ein zweites Gefäß mit einem anderen Fluid getaucht, in dem die Partikel dispergiert werden. Hierzu wird das Magnetfeld ausgeschaltet und die am Stab abgeschiedenen Partikel abgewaschen. Dabei wird der Stab um seine Längsachse in schnelle Rotation, etwa von 1 bis 50 Umdrehungen pro Sekunde, versetzt. Diese Rotation bewirkt, daß die abgeschiedenen Partikel sehr effektiv vom Stab entfernt werden.

Falls die anhaftenden Partikel mit dem sorbierten Stoff verworfen werden sollen, kann alternativ der Stab einfach mit einem Fluid abgespritzt werden, wobei die Erregerspule abgeschaltet und der Stab in schnelle Rotation versetzt wird.

Einige Ausführungsformen des Magnetseparators werden im folgenden anhand von drei Figuren näher erläutert.

Es zeigen:
Fig. 1 eine erste Ausführungsform mit einem einzigen Stab;
Fig. 2 eine zweite Ausführungsform mit einem einzigen Stab und verschiebbaren Probehaltern;
Fig. 3 eine dritte Ausführungsform mit mehreren Stäben und Probehaltern.

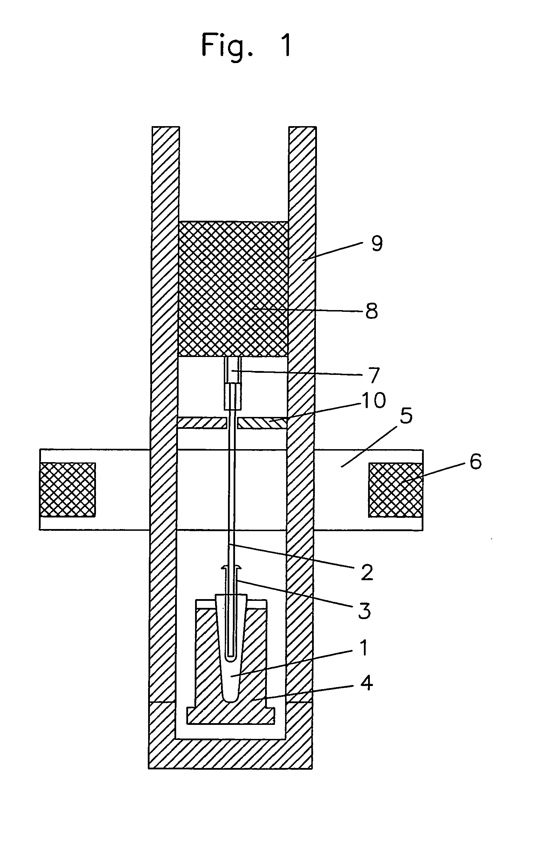

Fig. 1 zeigt einen Magnetseparator mit einem einzigen Stab 2 aus einem weichmagnetischen Material. Der Stab 2 taucht in das Fluid 1 ein, in dem magnetisierbare Partikel dispergiert sind. Der Stab 2 ist mit einer auswechselbaren Hülse 3 aus einem Kunststoff versehen, die einen direkten Kontakt zwischen dem weichmagnetischen Material und dem Fluid 1 sowie seinen Inhaltsstoffen vermeidet. Das Gefäß mit dem Fluid ist in die Halterung 4 eingesetzt. Um den Stab 2 ist eine Spulenhalterung 5 mit einer elektromagnetischen Erregerspule 6 angeordnet, mit deren Hilfe der Stab 2 entlang seiner Längsachse magnetisiert werden kann. Das freie Ende des Stabes 2 ist in einer vertikal in dem Gehäuse 9 verschiebbaren Halterung 8 gelagert, die außerdem mit einer Vorrichtung 7 zum Drehen des Stabes versehen ist, mit deren Hilfe der Stab sowohl in eine langsame als auch in eine schnelle Rotation versetzt werden kann. Das Gehäuse 9 ist außerdem mit einer Lochblende 10 versehen, an der die Hülse 3 abgestreift werden kann.

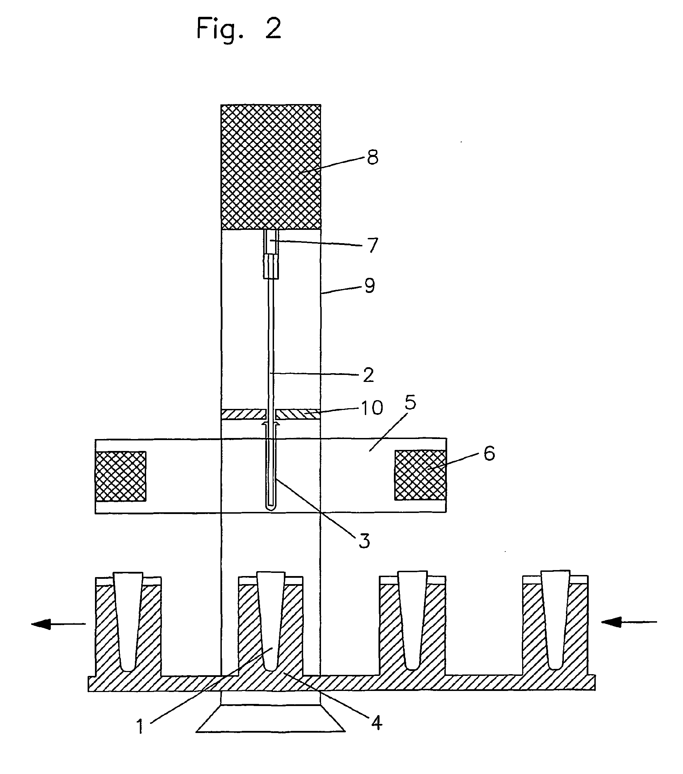

Fig. 2 zeigt eine weitere Ausführungsform, die sich von der in Fig. 1 dargestellten dadurch unterscheidet, daß eine Halterung 4 zur gleichzeitigen Aufnahme von mehreren Proben vorgesehen ist. Die Halterung 4 ist horizontal verschiebbar, so daß der Stab 2 in jedes Fluid 1 eintauchen kann. Die übrigen Bezugszeichen haben die gleiche Bedeutung wie in Fig. 1.

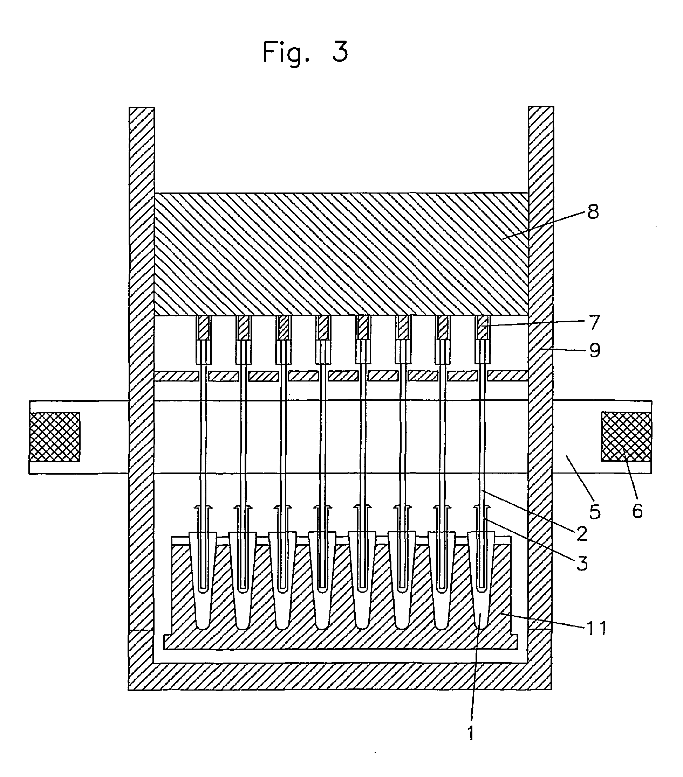

Eine Vorrichtung mit einer Vielzahl von Stäben 2 und einer horizontal verschiebbaren Halterung 11 für eine Vielzahl von Gefäßen für Fluide 1 ist in Fig. 3 dargestellt. Mit einer solchen Ausführungsform kann eine automatisierte Verarbeitung von Proben erfolgen. Die Bezugszeichen haben wiederum die gleiche Bedeutung wie in Fig. 1.

## Patentansprüche

1. Verfahren zum Abtrennen eines Stoffes, der in einem ersten Fluid (1) dispergiert oder gelöst ist, mit den Schritten:
a) Versetzen des ersten Fluids (1) mit magnetisierbaren Partikeln, so daß der Stoff an den Partikeln sorbiert wird,
b) Eintauchen eines Stabes (2) aus einem weichmagnetischen Material in das erste Fluid (1),
c) Magnetisieren des Stabes (2) entlang seiner Längsachse durch eine Erregerspule (6), wodurch die Partikel mit dem sorbierten Stoff auf dem Stab (2) abgeschieden werden,
d) Herausziehen des Stabes (2) aus dem ersten Fluid (1) zusammen mit den am Stab (2) abgeschiedenen Partikel im magnetisierten Zustand,
e) Abschalten der Erregerspule und Abwaschen der am Stab abgeschiedenen Partikel mit Hilfe eines zweiten Fluids, **dadurch gekennzeichnet, daß** während des Abwaschens der Stab um seine Längsachse in Rotation versetzt wird.

2. Verfahren nach Anspruch 1, bei dem das erste Fluid (1) durchmischt wird, in dem der Stab (2) in eine Rotation um seine Längsachse versetzt wird.

3. Magnetseparator zum Abtrennen eines Stoffes, der in einem ersten Fluid (1) dispergiert oder gelöst ist, mit den Merkmalen:
mindestens ein vertikal angeordneter Stab (2) aus einem weichmagnetischen Material ist mit einer elektrischen Erregerspule (6) umgeben, die so angeordnet ist, daß er sich durch Aktivieren der Erregerspule (6) entlang seiner Längsachse magnetisieren läßt, **dadurch gekennzeichnet, daß** der Stab (2) mit einem unteren und einem oberen Ende in der Weise in einer Halterung (8) an seinem oberen Ende fixiert ist, daß er entlang seiner Längsachse bewegbar ist und um seine Längsachse in Rotation versetzt werden kann.

4. Magnetseparator nach Anspruch 3, bei dem die Halterung (8) mit Mitteln versehen ist, um den Stab (2) in eine regelbare Rotation versetzen.

5. Magnetseparator nach Anspruch 3 oder 4, bei dem das untere Ende des Stabes (2) mit einer Hülse (3) aus einem Kunststoff umgeben ist.

## Claims

1. Method for separating off a substance that has been dispersed or dissolved in a first liquid (1), the said method having the steps:
a) adding magnetisable particles to the first liquid (1) such that the substance is adsorbed on the particles,
b) dipping a rod (2) that is made from a soft magnetic material into the first liquid (1),
c) magnetising the rod (2) along its longitudinal axis by means of an excitation coil (6), the particles thereby being deposited with the adsorbed substance on the rod (2)
d) removing the rod (2) out of the first liquid (1) together with the particles deposited on the rod (2) in the magnetised state,
e) disconnecting the excitation coil and washing off the particles deposited on the rod by using a second liquid (1), **characterised in that** during the washing off process the rod (2) is set in rotation about its longitudinal axis.

2. Method according to claim 1, where the first liquid (1) is mixed thoroughly by the rod (2) being set into a rotation about its longitudinal axis.

3. Magnetic separator for separating off a substance that has been dispersed or dissolved in a first liquid, the said magnetic separator having the features:
at least one vertically disposed rod (2) that is made from soft magnetic material and has a bottom end and a top end is surrounded by an electric excitation coil (6), which is disposed such that the said rod can be magnetised along its longitudinal axis by activating the excitation coil (6), **characterised in that** the rod (2) is secured at its upper end in a holder (8) in such a manner that it is displaceable along its longitudinal axis and can be set in rotation about its longitudinal axis.

4. Magnetic separator according to claim 3, where the holder (8) is provided with means in order to set the rod (2) into a controllable rotation.

5. Magnetic separator according to claim 3 or 4, where the bottom end of the rod (2) is surrounded by a sleeve (3) made of plastics material.

## Revendications

1. Procédé de séparation d'une substance dispersée ou dissoute dans un premier fluide (1), comportant les étapes suivantes :
a) ajout, au premier fluide (1), de particules magnétisables pour sorber la substance sur les particules,
b) plongée d'une tige (2), constituée d'une matière magnétique douce, dans le premier fluide (1),
c) magnétisation de la tige (2) le long de son axe longitudinal par une bobine d'excitation (6), moyennant quoi les particules se déposent, avec la substance sorbée, sur la tige (2),
d) retrait de la tige (2) hors du premier fluide (1) avec les particules déposées sur la tige (2), à l'état magnétisé,
e) débranchement de la bobine d'excitation et séparation, par lavage, des particules déposées sur la tige à l'aide d'un deuxième fluide (1),
**caractérisé en ce que**
pendant le lavage, la tige (2) est mise en rotation autour de son axe longitudinal.

2. Procédé selon la revendication 1, selon lequel le premier fluide (1), dans lequel la tige (2) est mise en rotation autour de son axe longitudinal, est mélangé intimement.

3. Séparateur magnétique pour séparer une substance dispersée ou dissoute dans un premier fluide (1), comprenant :
au moins une tige (2) verticale, constituée d'une matière magnétique douce (3) et entourée d'une bobine d'excitation électrique (6) disposée de manière ce qu'elle (2) puisse être magnétisée par l'activation de la bobine d'excitation (6) le long de son axe longitudinal,
**caractérisé en ce que**
la tige (2) a une extrémité inférieure et une extrémité supérieure supérieure qui est fixée dans un support (8) de manière à pouvoir se déplacer le long de son axe longitudinal et à être mise en rotation autour de son axe longitudinal.

4. Séparateur magnétique selon la revendication 3,
dans lequel le support (8) est pourvu de moyens pour mettre la tige (2) en rotation réglable.

5. Séparateur magnétique selon la revendication 3 ou 4, dans lequel l'extrémité inférieure de la tige (2) est entourée d'un manchon (3) constitué d'une matière plastique.
